# FASCICULE DE BREVET EUROPEEN

(11) **EP 1 431 597 B1**
(45) Date de publication et mention de la délivrance du brevet: **30.06.2010**
(21) Numéro de dépôt: 03356208.3
(22) Date de dépôt: 19.12.2003
(51) Int. Cl.: F16C 11/06

(54) **Rotule metallique et son procédé de fabrication**
Herstellungsverfahren eines metallischen Kugelgelenks
Manufacturing method of a metallic ball joint

(30) Priorité: 20.12.2002 FR 0216355
(43) Date de publication de la demande: 23.06.2004
(73) Titulaire: SKF Aerospace France, 26240 Saint Vallier (FR)
(72) Inventeur: Cervera, Mathieu, 38150 ANJOU (FR); Maheo, Yves, 26140 Anneyron (FR); Blachon, Yvan, 26240 Ponsas (FR)
(74) Mandataire: Schouller, Jean-Philippe

(56) Documents cités:
- EP-A- 1 130 276
- FR-A- 2 258 552
- FR-A- 2 770 597
- US-A- 4 848 934

## Description

La présente invention concerne une rotule métallique, ainsi que son procédé de fabrication.

Les rotules métalliques sont en particulier utilisées dans l'industrie aéronautique, afin d'immobiliser en translation un organe, tel qu'une bielle, par rapport à une pièce de structure de la construction, tout en permettant leur mouvement relatif en rotation.

De manière connue, une telle rotule métallique comprend une bague intérieure, dont la surface intérieure est adaptée pour être montée sur un arbre. A cet effet, cette surface intérieure peut être pourvue de gorges coopérant avec des cannelures réalisées sur la surface extérieure de l'arbre, de manière à garantir une meilleure liaison mutuelle.

Cette bague intérieure possède une surface extérieure sphérique tronquée, définissant ainsi deux parois latérales, aptes à coopérer avec la surface intérieure correspondante d'une bague extérieure. La bague intérieure et la bague extérieure possèdent donc trois degrés de liberté mutuels en rotation, alors qu'elles sont assujetties l'une à l'autre en translation.

On connaît différents procédés de réalisation d'une telle rotule métallique.

L'un de ceux-ci consiste à réaliser tout d'abord la bague intérieure selon ses dimensions définitives, puis à rapporter autour de la périphérie externe un manchon métallique qui est embouti contre la surface extérieure de la bague intérieure. Le manchon est alors usiné au niveau de sa périphérie extérieure, de manière à constituer la bague extérieure définitive.

Une autre solution, qui est plus spécifiquement visée par l'invention, consiste à réaliser la bague intérieure en deux éléments en forme de C.

Ce mode de fabrication est connu du brevet français 2 770 597, au nom de la Demanderesse. Selon ce document, on réalise une ébauche d'un seul tenant, possédant des surfaces extérieure et intérieure sensiblement identiques aux surfaces définitives de la bague intérieure, puis on effectue une découpe de cette ébauche, de manière à réaliser les deux éléments précités, en forme de C.

En service, il existe ainsi entre ces deux éléments constitutifs un espace intercalaire, correspondant à l'épaisseur de la découpe précitée. Un tel espace, qui n'est nullement préjudiciable à la bonne tenue mécanique de la bague intérieure, permet de définir un volume au sein duquel peut être admis le fluide de graissage.

Les rotules métalliques équipées d'une bague intérieure, réalisées selon le procédé décrit ci-dessus, se révèlent très satisfaisantes à l'usage.

Cependant, l'invention se propose d'améliorer de telles rotules métalliques, en particulier en réduisant leur masse. L'invention vise également à maîtriser la lubrification de ces rotules métalliques, de façon plus satisfaisante que dans l'art antérieur.

A cet effet, elle a pour objet une rotule métallique comprenant une bague intérieure et une bague extérieure coopérant par des surfaces de contact sphériques tronquées respectives, ladite bague intérieure étant destinée à être montée autour d'un arbre et étant constituée de deux éléments présentant, en coupe transversale, une forme de C, les surfaces en regard de ces deux éléments étant espacées l'une de l'autre en service, caractérisée en ce qu'elle comprend également un palier tubulaire, autour duquel est montée la bague intérieure, ce palier étant destiné à être monté sur ledit arbre.

Selon d'autres caractéristiques de l'invention :
- le palier présente une surface intérieure cylindrique destinée à reposer contre l'arbre, ainsi qu'une surface extérieure cylindrique, sur laquelle est montée la bague intérieure ;
- la bague intérieure est montée folle par rapport au palier, au moins en rotation autour d'un axe principal de l'arbre ;
- la dimension axiale du palier est supérieure ou égale à la dimension axiale de la bague intérieure ;
- le palier est pourvu d'un épaulement, contre lequel est apte à venir en butée la bague intérieure ;
- le palier et la bague intérieure sont réalisés en des matériaux différents ;
- le palier est réalisé en bronze, alors que la bague intérieure est réalisée en titane.

L'invention a également pour objet un procédé de fabrication de la rotule métallique telle que définie ci-dessus, caractérisé en ce qu'il comprend les étapes suivantes :
- on forme la bague intérieure en réalisant une ébauche d'un seul tenant, qui possède des surfaces extérieure et intérieure sensiblement identiques aux surfaces définitives de cette bague intérieure, puis on effectue une découpe de cette ébauche, de manière à réaliser les deux éléments en forme de C, constitutifs de la bague intérieure ;
- on introduit ces deux éléments constitutifs de la bague intérieure dans le volume intérieur de la bague extérieure ; et
- on rapporte l'ensemble, formé de la bague intérieure et de la bague extérieure, autour du palier tubulaire.

L'invention va être décrite ci-après, en faisant référence aux dessins annexés donnés uniquement à titre d'exemple non limitatif, dans lesquels :

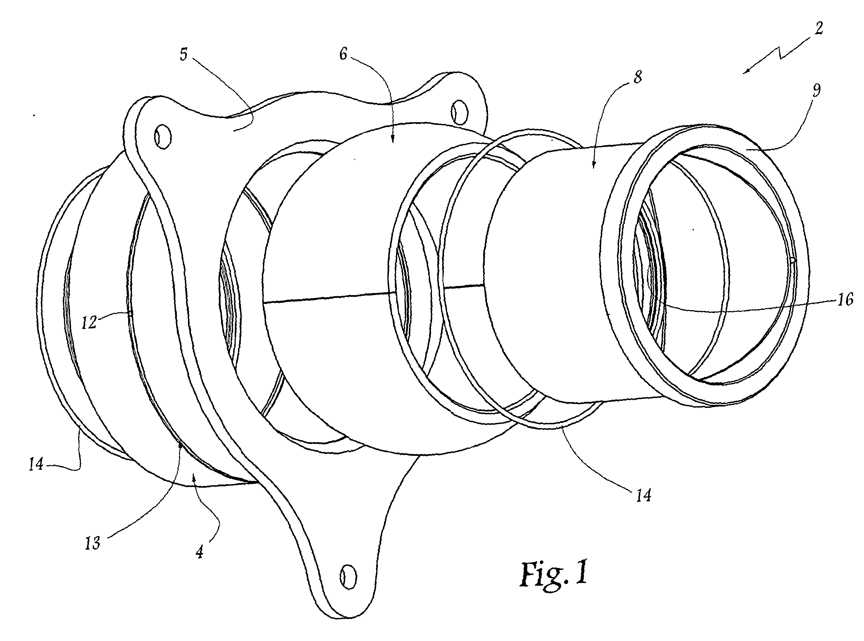

- La figure 1 est une vue en perspective éclatée, illustrant une rotule conforme à l'invention ;
- La figure 2 est une vue en coupe longitudinale de la rotule de la figure 1 ; et
- La figure 3 est une vue en coupe transversale selon la ligne II-II à la figure 2, illustrant la rotule des figures précédentes montée sur un arbre.

La rotule conforme à l'invention, représentée sur les différentes figures et désignée dans son ensemble par la référence 2, comprend tout d'abord une bague extérieure 4 et une bague intérieure 6.

La bague extérieure présente une surface extérieure 4A cylindrique, et une surface intérieure 4B sphérique tronquée, se raccordant à la surface extérieure 4A par des parois latérales 4C. Cette bague 4 est pourvue d'une collerette de fixation 5, connue en soi, qui est réalisée d'un seul tenant.

La bague intérieure 6 présente une surface extérieure 6A, dont le profil sphérique correspond à celui de la surface intérieure 4B de la bague extérieure 4. De la sorte, la bague intérieure et la bague extérieure possèdent, l'une par rapport à l'autre, trois degrés de liberté en rotation.

La surface intérieure 6B, sensiblement cylindrique, de la bague intérieure 6 est disposée contre la périphérie extérieure d'un organe tubulaire. Ce dernier, qui est désigné dans son ensemble par la référence 8, forme un palier, comme cela sera décrit plus en détail dans ce qui suit.

La bague intérieure 6 est réalisée en deux éléments 10, selon l'enseignement de FR-A-2 770 597, dont le contenu est incorporé par référence dans la présente description. Ces deux éléments 10, qui sont à peu près complémentaires, présentent en coupe transversale sensiblement une forme de C.

Leurs faces en regard sont planes et séparées mutuellement par un espace, de manière à définir deux volumes libres V et V'. On note enfin 6C les parois latérales, reliant les surfaces extérieure 6A et intérieure 6B de la bague intérieure 6.

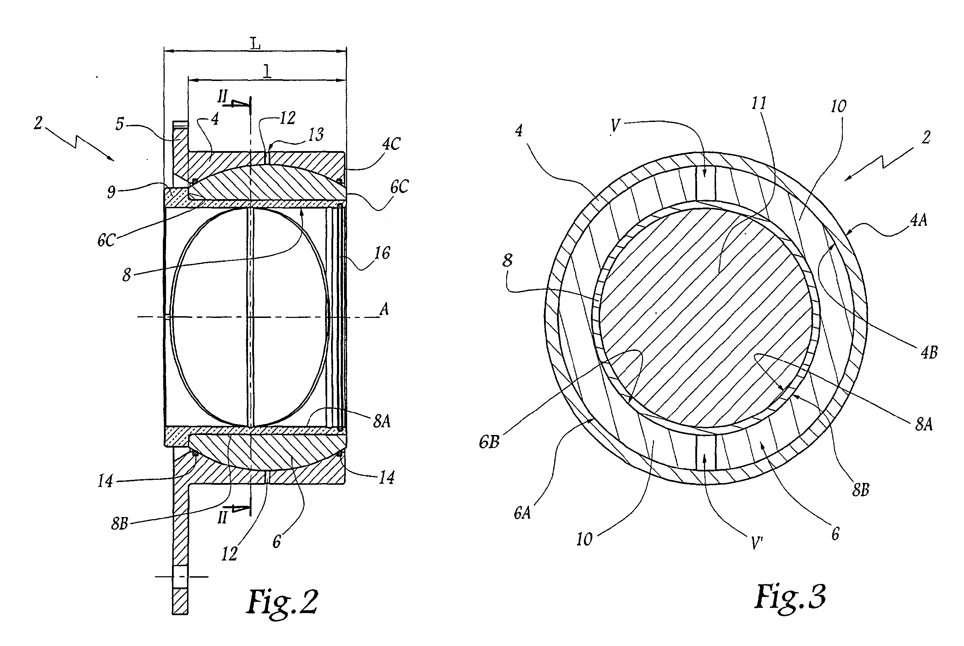

L'organe tubulaire 8 possède une surface intérieure 8A cylindrique, qui est disposée en service contre la périphérie extérieure d'un arbre correspondant 11, comme le montre la figure 3. Cet organe 8 possède en outre une surface cylindrique extérieure 8B, autour de laquelle s'étend la surface intérieure 6B de la bague intérieure 6.

L'organe 8 présente, à l'une de ses extrémités axiales, un épaulement 9, contre lequel la bague intérieure 6 est apte à venir en butée, par l'intermédiaire de l'une de ses surfaces latérales 6C (figure 2).

La dimension axiale, ou longueur L, du palier 8 est supérieure à la dimension axiale, ou longueur l, de la bague intérieure 6, ce qui permet notamment de limiter la flexion de l'arbre. Il est à noter qu'une telle mesure n'est pas garantie dans l'art antérieur, étant donné que la longueur de la bague intérieure est limitée, en vue d'autoriser son intégration.

A titre de variante, on peut également prévoir des moyens, permettant d'immobiliser en translation, selon deux sens opposés, la bague intérieure 6 et le palier 8. Il peut s'agir notamment d'un jonc, réalisé de façon connue en soi.

Dans l'exemple décrit et représenté, la bague intérieure 6 est montée folle par rapport au palier 8, en rotation. Ainsi, cette bague 6 est apte à entrer en rotation, par rapport à ce palier 8, autour de l'axe principal A de l'arbre 11.

A titre de variante, il est cependant possible de prévoir des moyens, permettant d'immobiliser en rotation cette bague 6 et ce palier 8.

Par ailleurs, des trous radiaux 12, ménagés dans une gorge 13 réalisée à la périphérie de la bague extérieure 4, sont destinés au passage d'un lubrifiant. Ces trous 12 communiquent avec des gorges supplémentaires, non représentées, qui sont creusées dans la bague intérieure 6.

Deux joints toriques 14, axialement décalés, sont intercalés entre les surfaces en regard de la bague extérieure 4 et de la bague intérieure 6. Ils permettent de contenir le lubrifiant précité dans la zone de charge sphérique, et d'empêcher les introductions de corps étrangers.

Enfin, un joint torique 16, de plus faible diamètre, est logé dans la surface intérieure du palier 8. Ce joint 16 est destiné à contenir le flux de lubrifiant destiné au graissage sur l'axe, et à empêcher l'introduction de corps étrangers.

Il est à noter que, de façon avantageuse, certains au moins des différents éléments constitutifs de la rotule métallique 2 peuvent être réalisés en des matériaux différents. Ainsi, à titre d'exemple non limitatif, l'arbre 10 peut être chromé, alors que le palier 8 est réalisé en bronze, et les bagues respectivement intérieure 6 et extérieure 4 sont réalisées en titane.

Le montage de la rotule métallique 2 comprend tout d'abord une phase de réalisation des deux éléments 10, constitutifs de la bague intérieure 6. Cette phase est mise en oeuvre conformément à l'enseignement de FR-A-2 770 597, précédemment cité.

Puis, il s'agit de loger ces deux éléments 10 dans le volume intérieur de la bague extérieure 4, également selon l'enseignement de FR-A-2 770 597. Enfin, on rapporte l'ensemble, formé des bagues extérieure 4 et intérieure 6, à la périphérie extérieure du palier 8.

L'invention permet de réaliser les objectifs précédemment mentionnés.

En effet, la présence du palier 8, indépendant de la bague intérieure 6, permet de réaliser ces deux éléments en des matériaux différents.

Dans cette optique, on peut former le palier en un matériau spécifique, permettant d'optimiser le couple tribologique avec l'arbre destiné à être placé au contact de ce palier.

Cependant, il est possible de réaliser la bague intérieure en un matériau différent, étant donné que cette bague ne doit pas répondre aux mêmes contraintes mécaniques que le palier. Un tel matériau est notamment à même de présenter une densité inférieure à celui constitutif du palier.

De la sorte, l'invention assure une réduction très sensible de la masse totale de la rotule, par rapport à la technique connue. En effet, dans l'art antérieur, étant donné que la bague intérieure se trouve au contact de l'arbre, il est nécessaire de la réaliser entièrement en un matériau résistant à l'usure, présentant donc une densité importante.

Par ailleurs, l'invention permet de maîtriser la lubrification de l'ensemble de la rotule métallique, au niveau de l'arbre.

De plus, dans le cas où la bague intérieure est montée folle en rotation par rapport au palier, le pivotement de cette bague est en permanence garanti, même en cas de coincement du palier sur l'arbre.

En outre, l'invention permet de s'affranchir de tout marquage intempestif de l'arbre, du fait de la présence des bords saillants de la bague intérieure, présents au voisinage de la découpe.

Enfin, l'invention garantit une stabilité améliorée à la rotule métallique, puisque cette dernière ne peut être démontée sous l'effet d'une manipulation accidentelle.

## Revendications

1. Rotule métallique (2) comprenant une bague intérieure (6) et une bague extérieure (4) coopérant par des surfaces de contact sphériques tronquées (6A, 4B) respectives, ladite bague intérieure étant destinée à être montée autour d'un arbre (11) et étant constituée de deux éléments (10) présentant, en coupe transversale, une forme de C, les surfaces en regard de ces deux éléments (10) étant espacées l'une de l'autre en service, **caractérisée en ce qu'**elle comprend également un palier tubulaire (8), autour duquel est montée la bague intérieure (6), ce palier (8) étant destiné à être monté sur ledit arbre (11).

2. Rotule métallique selon la revendication 1, **caractérisée en ce que** le palier (8) présente une surface intérieure cylindrique (8A) destinée à reposer contre l'arbre (11), ainsi qu'une surface extérieure cylindrique (8B), sur laquelle est montée la bague intérieure (6).

3. Rotule métallique selon la revendication 2, **caractérisée en ce que** la bague intérieure (6) est montée folle par rapport au palier (8), au moins en rotation autour d'un axe principal (A) de l'arbre (11).

4. Rotule métallique selon l'une quelconque des revendications précédentes, **caractérisée en ce que** la dimension axiale (L) du palier (8) est supérieure ou égale à la dimension axiale (l) de la bague intérieure (6).

5. Rotule métallique selon l'une quelconque des revendications précédentes, **caractérisée en ce que** le palier (8) est pourvu d'un épaulement (9), contre lequel est apte à venir en butée la bague intérieure (6).

6. Rotule métallique selon l'une quelconque des revendications précédentes, **caractérisée en ce que** le palier (8) et la bague intérieure (6) sont réalisés en des matériaux différents.

7. Rotule métallique selon la revendication 6, **caractérisée en ce que** le palier (8) est réalisé en bronze, alors que la bague intérieure (6) est réalisée en titane.

8. Procédé de fabrication de la rotule métallique conforme à l'une quelconque des revendications précédentes, **caractérisé en ce qu'**il comprend les étapes suivantes :
- on forme la bague intérieure (6) en réalisant une ébauche d'un seul tenant, qui possède des surfaces extérieure et intérieure sensiblement identiques aux surfaces définitives de cette bague intérieure, puis on effectue une découpe de cette ébauche, de manière à réaliser les deux éléments (10) en forme de C, constitutifs de la bague intérieure (6) ;
- on introduit ces deux éléments (10) constitutifs de la bague intérieure (6) dans le volume intérieur de la bague extérieure (4) ; et
- on rapporte l'ensemble, formé de la bague intérieure (6) et de la bague extérieure (4), autour du palier tubulaire (8).

## Claims

1. A metallic ball joint (2) comprising an inner ring (6) and an outer ring (4) interacting via respective truncated spherical contact surfaces (6A, 4B), said inner ring being designed to be mounted around a shaft (11) and consisting of two elements (10) having, in the transversal cross-section, a C shape, wherein the surfaces opposing these two elements (10) are spaced a certain distance from each other in operation, **characterised in that** it also comprises a tubular bearing (8) around which the inner ring (6) is mounted, and wherein this bearing (8) is designed to be mounted on said shaft (11).

2. The metallic ball joint according to Claim 1, **characterised in that** the bearing (8) has an inner cylindrical surface (8A) designed to rest on the shaft (11), as well as a cylindrical outer surface (8B) on which the inner ring (6) is mounted.

3. The metallic ball joint according to Claim 2, **characterised in that** the inner ring (6) is mounted loosely relative to the bearing (8), at least in rotation around a main axis (A) of the shaft (11).

4. The metallic ball joint according to any one of the preceding claims, **characterised in that** the axial dimension (L) of the bearing (8) is greater than or equal to the axial dimension (1) of the inner ring (6).

5. The metallic ball joint according to any one of the preceding claims, **characterised in that** the bearing (8) is provided with a shoulder (9) against which the inner ring (6) is able to abut.

6. The metallic ball joint according to any one of the preceding claims, **characterised in that** the bearing (8) and the inner ring (6) are constructed from different materials.

7. The metallic ball joint according to Claim 6, **characterised in that** the bearing (8) is constructed of bronze whilst the inner ring (6) is constructed of titanium.

8. A method of manufacturing the metallic ball joint according to any one of the preceding claims, **characterised in that** it comprises the following steps:
- the inner ring (6) is formed by manufacturing a blank all in one piece having outer and inner surfaces essentially identical to the final surfaces of this inner ring, and this blank is then cut so that two elements (10) are formed in a C shape constituting the inner ring (6);
- these two elements (10) constituting the inner ring (6) is inserted into the inner volume of the outer ring (4); and
- the assembly formed of the inner ring (6) and the outer ring (4) is mounted around the tubular bearing (8).

## Patentansprüche

1. Metallisches Kugelgelenk (2), einen Innenring (6) und einen Außenring (4), die jeweils über abgestumpfte Kugelkontaktflächen (6A, 4B) zusammenarbeiten, umfassend, wobei der Innenring dazu dient, um eine Welle (11) herum befestigt zu werden, und aus zwei Elementen (10) gebildet ist, die im Querschnitt eine C-Form aufweisen, wobei die sich gegenüberstehenden Flächen dieser beiden Elemente (10) im Betrieb voneinander beabstandet sind, **dadurch gekennzeichnet, dass** es auch ein Rohrlager (8) aufweist, um das der Innenring (6) montiert ist, wobei dieses Lager (8) dazu vorgesehen ist, auf der Welle (11) angeordnet zu werden.

2. Metallisches Kugelgelenk nach Anspruch 1, **dadurch gekennzeichnet, dass** das Lager (8) eine zylindrische Innenfläche (8A) aufweist, die dazu dient, an der Welle (11) zu liegen, sowie eine zylindrische Außenfläche (8B), auf der der Innenring (6) montiert ist.

3. Metallisches Kugelgelenk nach Anspruch 2, **dadurch gekennzeichnet, dass** der Innenring (6) in Bezug auf das Lager (8) frei beweglich mindestens hinsichtlich seiner Drehung um eine Hauptachse (A) der Welle (11) montiert ist.

4. Metallisches Kugelgelenk nach einem beliebigen der vorhergehenden Ansprüche, **dadurch gekennzeichnet, dass** die axiale Abmessung (L) des Lagers (8) größer oder gleich der axialen Abmessung (1) des Innenrings (6) ist.

5. Metallisches Kugelgelenk nach einem beliebigen der vorhergehenden Ansprüche, **dadurch gekennzeichnet, dass** das Lager (8) mit einer Schulter (9) versehen ist, wobei der Innenring (6) geeignet ist, gegen die Schulter in Anschlag zu kommen.

6. Metallisches Kugelgelenk nach einem beliebigen der vorhergehenden Ansprüche, **dadurch gekennzeichnet, dass** das Lager (8) und der Innenring (6) aus unterschiedlichen Materialien hergestellt sind.

7. Metallisches Kugelgelenk nach Anspruch 6, **dadurch gekennzeichnet, dass** das Lager (8) aus Bronze hergestellt ist, während der Innenring (6) aus Titan hergestellt ist.

8. Verfahren zum Herstellen eines metallischen Kugelgelenks nach einem beliebigen der vorhergehenden Ansprüche, **dadurch gekennzeichnet, dass** es die folgenden Schritte umfasst:
- der Innenring (6) wird gebildet, indem ein Rohling aus einem Stück hergestellt wird, der eine Außen- und eine Innenfläche besitzt, die im Wesentlichen identisch mit den endgültigen Flächen dieses Innenrings sind, dann wird ein Schnitt dieses Rohlings derart durchgeführt, dass zwei Elemente (10) in C-Form hergestellt werden, die Bestandteile des Innenrings (6) sind;
- diese zwei Elemente (10) des Innenrings (6) werden in das Innenvolumen des Außenrings (4) eingesetzt und
- die Anordnung bestehend aus dem Innenring (6) und dem Außenring (4) wird um das Rohrlager (8) aufgesetzt.
